# EUROPEAN PATENT APPLICATION

(11) **EP 4 852 157 A1**
(43) Date of publication of application: **09.12.2026**
(21) Application number: 26208080.7
(22) Date of filing: 17.04.2024
(51) Int. Cl.: H01M 10/658, B01J 13/00, C01B 33/158, C01B 33/159

(54) **AEROGEL BLANKET**

(30) Priority: 19.04.2023 KR 20230051229
(62) Document number(s) of the earlier application(s) in accordance with Art. 76 EPC: 24793002.7 / 4 570 758
(71) Applicant: LG Chem, Ltd., Seoul 07336 (KR)
(72) Inventor: KANG, Tae Gyeong, 34122 Daejeon (KR); OH, Kyoung Shil, 34122 Daejeon (KR); UM, Ki Ju, 34122 Daejeon (KR); KIM, Ho Yeon, 34122 Daejeon (KR)
(74) Representative: Goddar, Heinz J.

(57) **Abstract**

The present invention relates to an aerogel blanket including aerogel with a low content of organic matters, and a method for preparing the aerogel blanket.

## Description

### TECHNICAL FIELD

### Cross-reference to Related Applications

This application claims the benefit of Korean Patent Application No. 10-2023-0051229, filed on April 19, 2023, in the Korean Intellectual Property Office, the disclosure of which is incorporated herein in its entirety by reference.

### Technical Field

The present invention relates to an aerogel blanket including aerogel with a low content of organic matters, and a method for preparing the aerogel blanket.

### BACKGROUND ART

Electronic products such as laptops, OLEDs, or TVs have hot spots caused by heat sources, which may reduce the emotional quality perceived by consumers due to partial heat dissipation from the surface of a device. In addition, if the heat is not properly diffused to the outside due to the use of a simple heat insulation material, excessively accumulated heat may cause system failure, shorten the lifespan of a product, or even cause explosion or fire. In order to solve problems caused by such heat generation, various heat insulation materials have been applied, but until now, an optimal heat insulation material which is thin and has excellent heat insulation performance has not been developed, so that various research and technology development on heat insulation are being conducted.

In order to solve the above-described typical problems, there are cases of applying aerogel, which is attracting attention as a high-efficiency heat insulation material. Aerogel is a highly porous material composed of nanoparticles, and has a high porosity, a large specific surface area, and a low thermal conductivity, thereby attracting attention for its use as a heat insulation material, a soundproofing material, and the like having high efficiency.

However, since the preparation process thereof is complex and the preparation cost thereof is high, aerogel is used only for extremely limited uses, despite having such excellent material properties. In addition, due to its high porosity, aerogel has very poor mechanical strength, so that there is a disadvantage in that aerogel is prone to break even by a minor impact. Therefore, in recent years, an aerogel blanket complexation technique has been studied to compensate for the above disadvantages of aerogel itself and enable processing in various forms.

An aerogel blanket is an aerogel material subjected to complexation and made in the form of a mattress or sheet, and has characteristics of being bent, folded, or cut due to the flexibility thereof. Therefore, the aerogel blanket may be applied to pipe insulation, clothing, or the like, and various industrial applications thereof are also possible. The aerogel blanket has flexibility since it is a composite composed of fiber and aerogel. The fiber serves to reinforce the flexibility and mechanical strength of the aerogel blanket, and the aerogel imparts heat insulation properties due to its porosity. It is a key complexation technique of the aerogel blanket in that features of the fiber and features of the aerogel are complexed to strength the advantages of the fiber and the aerogel and compensate for the disadvantages thereof. Such an aerogel blanket is a new material superior in heat resistance and heat insulation to polystyrene foam or polyurethane foam, which is a conventional polymer insulation material, and is attracting attention as a high-tech material capable of solving energy saving and environmental problems to be unfolded in the future.

Meanwhile, such aerogel has very low mechanical strength due to the porous structure thereof, so that an aerogel composite are prepared and used by impregnating and combining a fiber such as an inorganic fiber or organic fiber, which is a typical heat insulation fiber, with aerogel, and the aerogel composite has weak adhesion between the fiber and the aerogel, so that aerogel particles are separated during such a processing process as cutting, bending, or the like, thereby generating dust and degrading durability, which may result in damage to a device and the like when the aerogel composite is applied as an heat insulation material for electronic products.

Therefore, there is a high need to develop a material capable of preventing flames from ignition and explosion of a battery module and a battery pack from spreading to an adjacent battery module regardless of a in capacity of a battery and an increase in size of the battery module and the battery pack.

### DISCLOSURE OF THE INVENTION

### TECHNICAL PROBLEM

An object of the present invention is to provide an aerogel blanket which may be used in products such as batteries to effectively implement heat insulation and fire suppression performance, and a heat insulation member including the aerogel blanket.

### TECHNICAL SOLUTION

In order to achieve the above object, the present invention provides an aerogel blanket, a heat insulation member including the same, a battery including the heat insulation member, and a method for preparing an aerogel blanket.
(1) The present invention provides an aerogel blanket including aerogel and a substrate for a blanket, wherein the aerogel blanket has a compression rate according to Equation 1 below is 15% to 30%.
   [Equation 1] $Compression rate \left(%\right) = \left[\left(Ta-Tb\right)/Ta\right] \times 100$
   In Equation 1 above, Ta is a thickness(mm) of the aerogel blanket before being compressed; and Tb is a thickness(mm) of the aerogel blanket after being compressed under 350 kPa.
(2) In (1) above, the present invention provides an aerogel blanket, wherein a content of an organic matter according to Equation 2 below is 1.2 wt% or less. 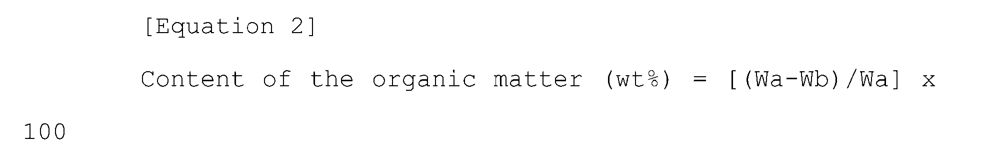 [Equation 2] Content of the organic matter (wt%) = [(Wa-Wb)/Wa] x 100
   In Equation 2 above, Wa is a weight(g) of the aerogel blanket before being heat-treated, and Wb is a weight(g) of the aerogel blanket after being heat-treated at 600 °C for 12 hours.
(3) In (1) or (2) above, the present invention provides an aerogel blanket, wherein the organic matter is one or more selected from the group consisting of a hydrophobic group bonded to the aerogel, a binder, and a sizing agent.
(4) In any one among (1) to (3) above, the present invention provides an aerogel blanket, wherein the aerogel blanket has a room-temperature thermal conductivity of 15 mW/mK to 35 mW/mK.
(5) In any one among (1) to (4) above, the present invention provides an aerogel blanket, wherein the aerogel includes pores having a pore diameter of 10 nm to 50 nm.
(6) In any one among (1) to (5) above, the present invention provides an aerogel blanket, wherein the substrate for a blanket is one or more selected from the group consisting of a film, a sheet, a net, a fiber, a porous body, a foam body, and a non-woven fabric body.
(7) In (6) above, the present invention provides an aerogel blanket, wherein the substrate for a blanket is one or more selected from the group consisting of glass fiber, ceramic wool, basalt fiber, and ceramic paper.
(8) In any one among (1) to (7) above, the present invention provides an aerogel blanket, wherein the aerogel blanket has a moisture impregnation rate of 100 wt% or greater according to Equation 3 below.

   [Equation 3] $Moisture impregnation rate \left(wt%\right) = \left[\left(Wc-Wd\right)/Wd\right] \times 100$
   In Equation 3 above, Wc is the weight(g) of the aerogel blanket after being immersed in distilled water at 21±2 °C for 15 minutes, and Wd is the weight(g) of the aerogel blanket before being immersed.
(9) In any one among (1) to (8) above, the present invention provides an aerogel blanket, wherein the aerogel blanket has heat of combustion of 200 cal/g or less according to the ISO 1716 measurement method.
(10) In any one among (1) to (9) above, the present invention provides an aerogel blanket, wherein the aerogel blanket is prepared by a preparation method including 1) preparing a sol, which includes a precursor material and a catalyst composition, 2) impregnating a substrate for a blanket with the sol, and gelling the sol to prepare a wet gel blanket, 3) surface-modifying the wet gel blanket, 4) drying the surface-modified wet gel blanket, and 5) heat-treating the dried wet gel blanket at a temperature of 450 °C to 650 °C for 10 minutes to 6 hours.
(11) In any one among (1) to (10) above, the present invention provides an aerogel blanket, wherein the aerogel blanket is prepared by a preparation method including 1) preparing a sol, which includes a precursor material and a catalyst composition, 2) impregnating a substrate for a blanket with the sol, and gelling the sol to prepare a wet gel blanket, and 3) drying the wet gel blanket, wherein the substrate for a blanket is pre-treated at a temperature of 400 °C to 500 °C for 30 minutes to 2 hours, and surface-treating the wet gel blanket is not included.
(12) The present invention provides a heat insulation member including the aerogel blanket according to any one among (1) to (11) above.
(13) The present invention provides a battery including the heat insulation member of (12) above.

### ADVANTAGEOUS EFFECTS

An aerogel blanket according to the present invention has a low content of organic matters, thereby exhibiting excellent endothermic and extinguishing actions, so that the aerogel blanket may be used in an article to effectively perform fire occurrence and fire propagation functions.

### BRIEF DESCRIPTION OF THE DRAWING

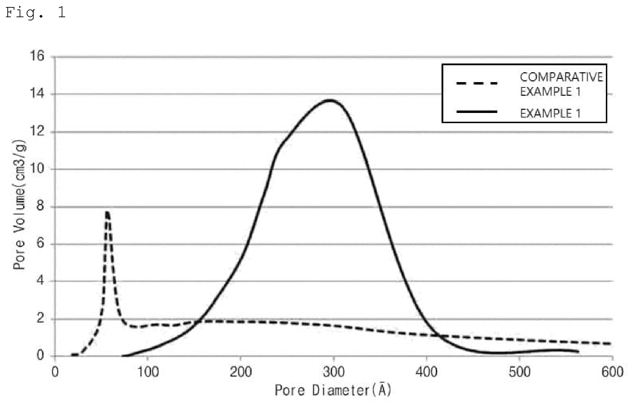

FIG. 1 is a graph showing the pore distribution of an aerogel blanket of each of Example 1 and Comparative Example 1.

### MDOE FOR CARRYING OUT THE INVENTION

Hereinafter, the present invention will be described in more detail to facilitate understanding of the present invention.

It will be understood that words or terms used in the description and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

Hereinafter, the present invention will be described in detail.

An aerogel blanket of the present invention includes aerogel and a substrate for a blanket, wherein the content of an organic matter according to Equation 2 below is 1.2 wt% or less. [Equation 2] $Content of organic matter \left(wt%\right) = \left[\left(Wa-Wb\right)/Wa\right] \times 100$

In Equation 2 above, Wa is the weight(g) of the aerogel blanket before being heat-treated, and Wb is the weight(g) of the aerogel blanket after being heat-treated at 600 °C for 12 hours.

A typical aerogel blanket is prepared through a hydrophobization process using a surface modification step, thereby inevitably containing organic matters of a predetermined content or greater. If such an aerogel blanket is exposed to high-temperature and high-energy conditions, a hydrophobic group on the surface thereof, which has been introduced during the surface modification, combusts, resulting in generating flames, odors, and heat. The above-described phenomenon has become a cause of limiting the temperature range in which an aerogel blanket can be used for a heat insulation member or the like, and particularly, there has been a limitation in that the aerogel blanket cannot be used for a battery or the like which is required to be used under ultra-high temperature conditions of 1000 °C or higher, or even if used, the performance of the aerogel blanket is significantly degraded.

On the other hand, the aerogel blanket according to the present invention is characterized by having a low content of organic matters as described above. This indicates that the aerogel blanket of the present invention includes a hydrophobic group in a small content, so that a phenomenon such as heat generation at high temperatures due to the hydrophobic group is suppressed, which allows the aerogel blanket of the present invention to be used for a heat insulation member and the like even in an extreme environment of very high temperatures unlike a typical aerogel blanket.

In the present invention, the organic matter may be one or more selected from the group consisting of a hydrophobic group bonded to the aerogel, a binder, and a sizing agent. More specifically, the hydrophobic group may be an alkyl group such as a methyl group or an ethyl group, and the binder and the sizing agent may be polystyrene, polybutylacrylate, polyvinyl alcohol, polyester, polyurethane, an epoxy resin, an acrylic resin, or a combination thereof, but are not limited thereto.

In the present invention, the aerogel blanket may have a room-temperature thermal conductivity of 15 mW/mK to 35 mW/mK, specifically 18 mW/mK to 30 mW/mK, or 20 mW/mK to 25 mW/mK.

The aerogel blanket of the present invention has excellent high-temperature heat blocking performance while maintaining a suitable thermal conductivity as described above.

In the present invention, the aerogel included in the aerogel blanket may include pores having a pore diameter of 10 nm to 50 nm.

In the present invention, the aerogel blanket may have a moisture impregnation rate of 100 wt% or greater, specifically 150 wt% or greater, according to the ASTM C1511 measurement method. Specifically, the moisture impregnation rate may be calculated according to Equation 3 below. [Equation 3] $Moisture impregnation rate \left(wt%\right) = \left[\left(Wc-Wd\right)/Wd\right] \times 100$

In Equation 3 above, Wc is the weight(g) of the aerogel blanket after being immersed in distilled water at 21±2 °C for 15 minutes, and Wd is the weight(g) of the aerogel blanket before being immersed.

The aerogel blanket of the present invention has a low content of organic matters, and thus, has a low degree of hydrophobicity, and at the same time, may exhibit a high moisture impregnation rate as described above.

In the present invention, the aerogel blanket may have heat of combustion of 200 cal/g or less, more specifically 150 cal/g or less, 100 cal/g or less, or 70 cal/g or less according to the ISO 1716 measurement method.

The aerogel blanket of the present invention exhibits very low heat of combustion compared to a typical aerogel blanket, and thus, has low heat energy emitted while being combusted when exposed to a high temperature, which may minimize heat generation, so that the aerogel blanket of the present invention exhibits excellent heat blocking performance.

In the present invention, the aerogel blanket may have a compression rate of 15% to 30%, specifically 15% to 29%, or 16% to 28% according to Equation 1 below. [Equation 1] $Compression rate \left(%\right) = \left[\left(Ta-Tb\right)/Ta\right] \times 100$

In Equation 1 above, Ta is the thickness(mm) of the aerogel blanket before being compressed, and Tb is the thickness(mm) of the aerogel blanket after being compressed under 350 kPa.

Specifically, the compression rate may be obtained by preparing an aerogel blanket sample of, for example, 10 cm X 10 cm, applying a pressure of 350 kPa to the sample using UTM equipment, and then comparing the thickness before and after the pressure application.

Since the aerogel blanket of the present invention exhibits excellent strength and compression resistance, a decrease in the thickness thereof due to a pressure is suppressed, so that the aerogel blanket may exhibit a low compression rate as described above.

In the present invention, the substrate for a blanket may be one or more selected from the group consisting of a film, a sheet, a net, a fiber, a porous body, a foam body, and a non-woven fabric body, and may be a laminate body of two or more layers thereof.

In addition, depending on the use thereof, the substrate for a blanket may have surface roughness formed or patterned on the surface thereof. Specifically, the substrate for a blanket may be a fiber capable of further improving heat insulation performance by including a space or a void which allows a sol to be easily inserted into and an aerogel to be easily formed inside the substrate of a blanket, and may have low thermal conductivity.

Specifically, the substrate for a blanket may be polyamide, polybenzimidazole, polyaramide, an acrylic resin, a phenol resin, polyester, polyetheretherketone (PEEK), polyolefin (polyethylene, polypropylene, a copolymer thereof, or the like), cellulose, carbon, cotton, wool, hemp, non-woven fabric, glass fiber, ceramic wool, basalt fiber, ceramic paper, or the like, and more specifically, may be glass fiber, ceramic wool, basalt fiber, ceramic paper, or a combination thereof, which is an inorganic fiber series, but is not limited thereto.

In addition, the aerogel blanket of the present invention may be included in a heat insulation member, and the heat insulation member may be included and used in a battery.

The aerogel blanket of the present invention may be prepared using the following preparation method.

Specifically, a first aspect of the present invention includes 1) preparing a sol, which includes a precursor material and a catalyst composition, 2) impregnating a substrate for a blanket with the sol, and gelling the sol to prepare a wet gel blanket, 3) surface-modifying the wet gel blanket, 4) drying the surface-modified wet gel blanket, and 5) heat-treating the dried wet gel blanket at a temperature of 450 °C to 650 °C for 10 minutes to 6 hours.

In addition, a second aspect of the present invention includes 1) preparing a sol, which includes a precursor material and a catalyst composition, 2) impregnating a substrate for a blanket with the sol, and gelling the sol to prepare a wet gel blanket, and 3) drying the wet gel blanket, wherein the substrate for a blanket is pre-treated at a temperature of 400 °C to 500 °C for 30 minutes to 2 hours, and the second aspect does not include surface-treating the wet gel blanket.

### [Embodiment 1]

### Step 1)

Step 1) is a step of preparing a sol including a precursor material and a catalyst composition, and the sol may be prepared by mixing the precursor material and the catalyst composition.

According to an embodiment of the present invention, the sol in the present invention may be, for example, a silica sol, and when the sol is a silica sol, the precursor material may be a silica precursor.

At this time, the silica precursor may be an alkoxide-based compound containing silicon, and may specifically be tetraalkyl silicate such as tetramethyl orthosilicate (TMOS), tetraethyl orthosilicate (TEOS), methyl triethyl orthosilicate, dimethyl diethyl orthosilicate, tetrapropyl orthosilicate, tetraisopropyl orthosilicate, tetrabutyl orthosilicate, tetra secondary butyl orthosilicate, tetra tertiary butyl orthosilicate, tetrahexyl orthosilicate, tetracyclohexyl orthosilicate, and tetradodecyl orthosilicate. More specifically, the silica precursor may be tetraethyl orthosilicate (TEOS), at which time, the tetraethyl orthosilicate may more preferably be pre-hydrolyzed tetraethyl orthosilicate (HTEOS).

The HTEOS is an ethyl polysilicate oligomer material with a wide molecular weight distribution. When the HTEOS is synthesized in the form of an oligomer from a TEOS monomer, physical properties such as gelation time may be adjusted, so that the HTEOS may be easily applied according to user's reaction conditions. In addition, there is an advantage in that reproducible physical properties of a final product may be created.

That is, the HTEOS refers to a partially hydrated ethyl polysilicate oligomer, specifically an oligomer derived from a partially hydrated TEOS.

The silica precursor may be used in an amount such that the content of silica contained in the silica sol is to be 0.1 wt% to 30 wt%, but is not limited thereto. If the content of the silica satisfies the above-described range, it is preferable in terms of securing mechanical physical properties, flexibility in particular, of the aerogel blanket at an excellent level while having an improved heat insulation effect.

In addition, the catalyst composition may include an organic solvent, water, and a base catalyst, and at this time, the base catalyst may include an inorganic base such as sodium hydroxide or potassium hydroxide, or an organic base such as ammonium hydroxide, but is not limited thereto.

Specifically, the organic base may be ammonium hydroxide (NH₄OH), tetramethylammonium hydroxide (TMAH), tetraethyl ammonium hydroxide (TEAH), tetrapropylammonium hydroxide (TPAH), tetrabutylammonium hydroxide (TBAH), methylamine, ethylamine, isopropylamine, monoisopropylamine, diethylamine, diisopropylamine, dibutylamine, trimethylamine, triethylamine, triisopropylamine, tributylamine, choline, monoethanolamine, diethanolamine, 2-aminoethanol, 2-(ethylamino)ethanol, 2-(methylamino)ethanol, N-methyldiethanolamine, dimethylaminoethanol, diethylaminoethanol, nitrilotriethanol, 2-(2-aminoethoxy)ethanol, 1-amino-2-propanol, triethanolamine, monopropanolamine, or dibutanolamine, and a mixture of two or more thereof may be used. More specifically, the base catalyst may be NaOH.

In addition, the organic solvent may specifically be an alcohol, and at this time, the alcohol may be a monohydric alcohol such as methanol, ethanol, isopropanol, and butanol, or a polyhydric alcohol such as glycerol, ethylene glycol, propylene glycol, diethylene glycol, dipropylene glycol, and sorbitol, and any one thereof or a mixture of two or more thereof may be used. Among the above, when considering the miscibility with water and an aerogel, the alcohol may be a monohydric alcohol having 1-6 carbon atoms such as methanol, ethanol, isopropanol, and butanol, and may be, for example, ethanol.

The alcohol (polar organic solvent) as described above may be used in an appropriate amount by those skilled in the art in consideration of the degree of hydrophobicity in aerogel to be finally prepared while promoting a surface modification reaction.

According to an embodiment of the present invention, the catalyst composition may be included in an amount which allows the pH of the sol to be 4 to 8. When included in an amount which allows the pH of the sol to satisfy the above-described range, gelation may be easily and efficiently achieved. In addition, the catalyst composition is added in a liquid phase in which the base catalyst is diluted in water and the organic solvent, so that it is possible to prevent the problem in that the catalyst is precipitated.

### Step 2)

Step 2) is a step of impregnating a substrate for a blanket with the sol, and gelling the sol to prepare a wet gel blanket.

In the present invention, gelation may form a network structure from a precursor material, wherein the network structure may be a planar mesh structure in which specific polygons having one or more types of atomic arrangement are linked to each other, or a structure in which specific polyhedrons share their vertices, edges, faces, and the like with each other to form a three-dimensional skeleton structure.

The gelation of the sol may occur in a state in which the substrate for a blanket is impregnated with the sol.

The impregnation may be performed in a reaction vessel capable of accommodating the substrate for a blanket, and impregnation may be performed by pouring the sol into the reaction vessel, or by placing the substrate for a blanket in the reaction vessel containing the sol to wet the substrate for a blanket. At this time, in order to improve the bonding of the substrate for a blanket and the sol, the substrate for a blanket may be lightly pressed down to be sufficiently impregnated. Thereafter, the substrate for a blanket may be pressed to a predetermined thickness at a constant pressure to remove the excess sol, thereby shortening the subsequent drying time.

According to an embodiment of the present invention, the substrate for a blanket may be a film, a sheet, a net, a fiber, a porous body, a foam body, a non-woven fabric body, or a laminate body of two or more layers thereof. In addition, depending on the use thereof, the substrate for a blanket may have surface roughness formed or patterned on the surface thereof. Specifically, the substrate for a blanket may be a fiber capable of further improving heat insulation performance by including a space or a void which allows an aerogel to be easily formed inside the blanket substrate, and may have low thermal conductivity.

Specifically, the substrate for a blanket may be polyamide, polybenzimidazole, polyaramide, an acryl resin, a phenol resin, polyester, polyetheretherketone (PEEK), polyolefin (polyethylene, polypropylene, a copolymer thereof, or the like), cellulose, carbon, cotton, wool, hemp, non-woven fabric, glass fiber, ceramic wool, basalt fiber, ceramic paper, or the like, and more specifically, may be glass fiber, ceramic wool, basalt fiber, or ceramic paper, which is an inorganic fiber series, but is not limited thereto.

After Step 2) above, additionally, a step of aging the wet gel blanket may be further included.

The aging step may be further performed as a process for allowing a chemical change to be completely achieved by leaving the silica wet gel or the silica wet gel blanket to stand at a suitable temperature, and the aging step may more firmly form the formed network structure, and thus, may enhance the mechanical stability of the silica aerogel or silica aerogel blanket of the present invention.

The aging step of the present invention is performed by adding a solution in which a basic catalyst such as sodium hydroxide (NaOH), potassium hydroxide (KOH), ammonium hydroxide (NH₄OH), triethylamine, pyridine, and the like is diluted in an organic solvent at a concentration of 1-10%. Therefore, a Si-O-Si bonding in an aerogel is induced to the maximum to allow the network structure of a silica gel to be firmer, so that there is an effect of facilitating the maintenance of the pore structure in a quick drying process to be performed later. At this time, the organic solvent may be the alcohol (polar organic solvent) described above, and specifically, may include ethanol.

Also, the aging step should be performed in a suitable temperature range to enhance the optimal pore structure, and the aging step of the present invention may be performed by leaving the wet gel blanket to stand for 1 hour to 24 hours at a temperature of 30 °C to 70 °C. If the aging temperature is below 30 °C, aging time becomes excessively long, which may cause the total process time to increase, so that there may be a problem in that productivity decreases, and if the aging temperature is above 70 °C, the temperature is out of the boiling point of ethanol, so that there may be a problem in that the loss of the solvent due to evaporation increases, which may cause the cost of raw materials to increase.

### Step 3)

Step 3) is a step of surface modifying the wet gel blanket, and may be a step of hydrophobizing the wet gel blanket, specifically the silica wet gel blanket, with a surface modifier. Specifically, the step may be performed by bonding a hydrophobic group derived from the surface modifier to the surface of the silica wet gel.

In the silica aerogel blanket, a silanol group (Si-OH) is present on the surface of the silica, and the silanol group absorbs water in the air due to the hydrophilic properties thereof, so that there is a disadvantage in that thermal conductivity gradually increases. Therefore, in order to suppress the absorption of moisture in the air to maintain a low thermal conductivity, there is a need for modifying the surface of the silica aerogel to be hydrophobic in advance.

As the surface modifier of the present invention, a compound which hydrophobizes the surface of a wet gel may be applied without limitation, which may be, for example, a silane-based compound, a siloxane-based compound, a silanol-based compound, a silazane-based compound, or a combination thereof.

Specifically, the surface modifier may be a silane-based compound such as trimethylchlorosilane (TMCS), dimethyl dimethoxy silane, dimethyl diethoxy silane, methyl trimethoxy silane, trimethyl ethoxy silane, vinyl trimethoxy silane, ethyl triethoxy silane, phenyl triethoxy silane, phenyl trimethoxy silane, tetraethoxy silane, dimethyl dichloro silane, and 3-aminopropyl triethoxy silane, a siloxane-based compound such as polydimethyl siloxane, polydiethyl siloxane, and octamethyl cyclotetra siloxane, a silanol-based compound such as trimethylsilanol, triethylsilanol, triphenyl silanol, and t-butyldimethylsilanol, a silazane-based compound such as 1,2-diethyldisilazane (1,2-diethyldisilazane), 1,1,2,2-tetramethyldisilazane, 1,1,3,3-tetramethyl disilazane, 1,1,1,2,2,2-hexamethyldisilazane (HMDS), 1,1,2,2-tetraethyldisilazane, and 1,2-diisopropyldisilazane, or a combination thereof, and specifically, the surface modifier may be hexamethyldisilazane.

The surface modifier may be used in the form of a solution diluted in an organic solvent, and the organic solvent may be the alcohol (organic solvent) described above in Step 1), wherein the surface modifier may be diluted to 1 vol% to 10 vol% based on the total volume of the diluted solution.

In addition, the surface modifier may be added such that the amount thereof is 0.01 vol% to 10 vol% with respect to the wet gel blanket. Since the amount of the surface modifier is sufficient in the above-described range, not only the surface modification reactivity may be excellent, but also the surface modification may be facilitated, so that the condensation reaction of the silanol group not surface-modified may be suppressed during drying to allow a finally produced silica aerogel blanket to have more excellent porosity.

Step 3) above may be performed for 1 hour to 24 hours by adding the surface modifier at a temperature of 50 °C to 90 °C, preferably 50 °C to 80 °C.

### Step 4)

Step 4) is a step of drying the surface-modified wet gel blanket, and by removing the water and the solvent in the wet gel blanket, an aerogel blanket may be prepared.

Meanwhile, the preparation method according to an embodiment of the present invention may further perform a washing step before the drying. The washing is a step of removing impurities (sodium ions, unreacted substances, byproducts, and the like) generated during the reaction and residual ammonia, which may generate an ammonium carbonate salt by reacting with CO₂ during supercritical drying, and the like in order to obtain a hydrophobic silica aerogel with high purity, and may be performed by a dilution process or an exchange process using a non-polar organic solvent.

The drying step according to an embodiment of the present invention may be performed through a process of removing a solvent while maintaining the pore structure of an aged gel, and the drying step may be performed by a supercritical drying process or an atmospheric drying process.

The supercritical drying process may be performed using supercritical carbon dioxide. Carbon dioxide (CO₂) is in a gaseous state at room temperature and atmospheric pressure, but when a temperature and a pressure exceed a predetermined limit of a temperature and a pressure called a supercritical point, the evaporation process does not occur so that carbon dioxide becomes to be in a critical state in which a gas and a liquid cannot be distinguished, and carbon dioxide in the critical state is referred to as a supercritical carbon dioxide.

The supercritical carbon dioxide has a molecular density close to that of a liquid, but has a low viscosity, thereby having properties similar to those of a gas, and has a high diffusion rate and a high thermal conductivity, so that the drying efficiency is high, and drying processing time may be shortened.

Specifically, the supercritical drying process performs a solvent substitution process in which an aged wet gel blanket is placed into a supercritical drying reactor, and then CO₂ in a liquid state is filled therein, followed by substituting an alcohol solvent inside the wet gel with CO₂. Thereafter, the temperature is raised to 40 °C to 70°C at a predetermined temperature raising rate, specifically, 0.1 °C/min to 1 °C/min, and the pressure which is greater than or equal to a pressure at which carbon dioxide becomes to be a supercritical state, specifically, the pressure of 100 bar to 150 bar is maintained to allow the carbon dioxide to remain in the supercritical state for a predetermined amount of time, specifically for 20 minutes to 1 hour. In general, carbon dioxide becomes supercritical at a temperature of 31 °C, and a pressure of 73.8 bar. After carbon dioxide is maintained at a predetermined temperature and a predetermined pressure to remain in a supercritical state for 2 hours to 12 hours, more specifically, 2 hours to 6 hours, the pressure is gradually lowered to complete the supercritical drying process to prepare an aerogel blanket.

Also, the atmospheric drying process may be performed according to a typical method such as hot air drying at a temperature of 70 °C to 200 °C and an atmospheric pressure (1±0.3 atm), IR drying, or the like.

As a result of the above-described drying process, a blanket including porous aerogel having nano-sized pores may be manufactured. Particularly, the silica aerogel according to an embodiment of the present invention has excellent physical properties, low tap density and high porosity in particular, together with a high degree of hydrophobicity, and a silica aerogel-containing blanket including the same has excellent mechanical flexibility together with low thermal conductivity.

In addition, before or after the drying process, a compression process to control the thickness and to make the internal structure and surface shape of a blanket uniform, a molding process to have a suitable shape or morphology according to use, or a lamination process for laminating a separate functional layer may be further performed.

### Step 5)

Step 5) is a step of performing heat treatment at a temperature of 450 °C to 650 °C for 10 minutes to 6 hours, in which the aerogel blanket is exposed to high temperatures under predetermined conditions to remove organic matters.

By performing the heat treatment at the above-described temperatures, it is possible to prevent excessive shrinkage of silica due to excessively high temperatures, and to sufficiently decompose the organic matters through appropriately high temperatures. Within the above-described range, the heat treatment may be performed by those skilled in the art using an appropriate combination of temperature and time.

In addition, through the heat treatment, the silica in the aerogel blanket is sintered, through which the strength of the aerogel blanket may be improved.

As such, since the organic matters are removed through the heat treatment process as described above, the aerogel blanket of the present invention has a low content of organic matters of 1.2 wt% of less, but exhibits high strength, and thus, may have a lower compression rate than a typical aerogel blanket.

### [Embodiment 2]

### Step 1)

Step 1) is a step of preparing a sol including a precursor material and a catalyst composition, and the sol may be prepared by mixing the precursor material and the catalyst composition.

According to an embodiment of the present invention, the sol in the present invention may be, for example, a silica sol, and when the sol is a silica sol, the precursor material may be a silica precursor.

At this time, the silica precursor may be an alkoxide-based compound containing silicon, and may specifically be tetraalkyl silicate such as tetramethyl orthosilicate (TMOS), tetraethyl orthosilicate (TEOS), methyl triethyl orthosilicate, dimethyl diethyl orthosilicate, tetrapropyl orthosilicate, tetraisopropyl orthosilicate, tetrabutyl orthosilicate, tetra secondary butyl orthosilicate, tetra tertiary butyl orthosilicate, tetrahexyl orthosilicate, tetracyclohexyl orthosilicate, and tetradodecyl orthosilicate. More specifically, the silica precursor may be tetraethyl orthosilicate (TEOS), at which time, the tetraethyl orthosilicate may more preferably be pre-hydrolyzed tetraethyl orthosilicate (TEOS) (HTEOS).

The HTEOS is an ethyl polysilicate oligomer material with a wide molecular weight distribution. When the HTEOS is synthesized in the form of an oligomer from a TEOS monomer, physical properties such as gelation time may be adjusted, so that the HTEOS may be easily applied according to user's reaction conditions. In addition, there is an advantage in that reproducible physical properties of a final product may be created.

That is, the HTEOS refers to a partially hydrated ethyl polysilicate oligomer, specifically an oligomer derived from a partially hydrated TEOS.

The silica precursor may be used in an amount such that the content of silica contained in the silica sol is to be 0.1 wt% to 30 wt%, but is not limited thereto. If the content of the silica satisfies the above-described range, it is preferable in terms of securing mechanical physical properties, flexibility in particular, of the aerogel blanket at an excellent level while having an improved heat insulation effect.

In addition, the catalyst composition may include an organic solvent, water, and a base catalyst, and at this time, the basic catalyst may be an inorganic base such as sodium hydroxide and potassium hydroxide, or an organic base such as ammonium hydroxide, but in the case of the inorganic base, a metal ion included in a compound may be coordinated to a Si-OH compound, so that the organic base may be preferred.

Specifically, the organic base may be ammonium hydroxide (NH₄OH), tetramethylammonium hydroxide (TMAH), tetraethyl ammonium hydroxide (TEAH), tetrapropylammonium hydroxide (TPAH), tetrabutylammonium hydroxide (TBAH), methylamine, ethylamine, isopropylamine, monoisopropylamine, diethylamine, diisopropylamine, dibutylamine, trimethylamine, triethylamine, triisopropylamine, tributylamine, choline, monoethanolamine, diethanolamine, 2-aminoethanol, 2-(ethylamino)ethanol, 2-(methylamino)ethanol, N-methyldiethanolamine, dimethylaminoethanol, diethylaminoethanol, nitrilotriethanol, 2-(2-aminoethoxy)ethanol, 1-amino-2-propanol, triethanolamine, monopropanolamine, or dibutanolamine, and a mixture of two or more thereof may be used. More specifically, the base catalyst may be ammonium hydroxide (NH₄OH).

In addition, the organic solvent may specifically be an alcohol, and at this time, the alcohol may be a monohydric alcohol such as methanol, ethanol, isopropanol, and butanol, or a polyhydric alcohol such as glycerol, ethylene glycol, propylene glycol, diethylene glycol, dipropylene glycol, and sorbitol, and any one thereof or a mixture of two or more thereof may be used. Among the above, when considering the miscibility with water and aerogel, the alcohol may be a monohydric alcohol having 1 to 6 carbon atoms such as methanol, ethanol, isopropanol, and butanol, and for example, may be ethanol.

The alcohol (polar organic solvent) as described above may be used in an appropriate amount by those skilled in the art in consideration of the degree of hydrophobicity in aerogel to be finally prepared while promoting a surface modification reaction.

According to an embodiment of the present invention, the catalyst composition may be included in an amount which allows the pH of the sol to be 4 to 8. When included in an amount which allows the pH of the sol to satisfy the above-described range, gelation may be easily and efficiently achieved. In addition, the catalyst composition is added in a liquid phase in which the base catalyst is diluted in water and the organic solvent, so that it is possible to prevent the problem in that the catalyst is precipitated.

### Step 2)

Step 2) is a step of impregnating a substrate for a blanket with the sol, and gelling the sol to prepare a wet gel blanket.

In the present invention, the substrate for a blanket is pre-treated at a temperature of 400 °C to 500 °C for 30 minutes to 2 hours. Typically, a substrate for a blanket contains an organic matter of a predetermined content or greater, so that the organic matter contained in the substrate for a blanket is removed in advance through the pre-treatment to use the substrate for a blanket before preparing an aerogel blanket.

By performing the pre-treatment with pre-treatment conditions within the above ranges, the organic matter in the substrate for a blanket is removed, thereby reducing the content of the organic matter in a finally prepared aerogel blanket, while implementing excellent high-temperature heat blocking performance, strength, and the like of the aerogel blanket.

In the present invention, gelation may form a network structure from a precursor material, wherein the network structure may be a planar mesh structure in which specific polygons having one or more types of atomic arrangement are linked to each other, or a structure in which specific polyhedrons share their vertices, edges, faces, and the like with each other to form a three-dimensional skeleton structure.

The gelation of the sol may occur in a state in which the substrate for a blanket is impregnated with the sol.

The impregnation may be performed in a reaction vessel capable of accommodating the substrate for a blanket, and impregnation may be performed by pouring the sol into the reaction vessel, or by placing the substrate for a blanket in the reaction vessel containing the sol to wet the substrate for a blanket. At this time, in order to improve the bonding of the substrate for a blanket and the sol, the substrate for a blanket may be lightly pressed down to be sufficiently impregnated. Thereafter, the substrate for a blanket may be pressed to a predetermined thickness at a constant pressure to remove the excess sol, thereby shortening the subsequent drying time.

According to an embodiment of the present invention, the substrate for a blanket may be a film, a sheet, a net, a fiber, a porous body, a foam body, a non-woven fabric body, or a laminate body of two or more layers thereof. In addition, depending on the use thereof, the substrate for a blanket may have surface roughness formed or patterned on the surface thereof. Specifically, the substrate for a blanket may be a fiber capable of further improving heat insulation performance by including a space or a void which allows an aerogel to be easily formed inside the blanket substrate, and may have low thermal conductivity.

Specifically, the substrate for a blanket may be polyamide, polybenzimidazole, polyaramide, an acryl resin, a phenol resin, polyester, polyetheretherketone (PEEK), polyolefin (polyethylene, polypropylene, a copolymer thereof, or the like), cellulose, carbon, cotton, wool, hemp, non-woven fabric, glass fiber, or ceramic wool.

After Step 2) above, additionally, a step of aging the wet gel blanket may be further included.

The aging step may be further performed as a process for allowing a chemical change to be completely achieved by leaving the silica wet gel or the silica wet gel blanket to stand at a suitable temperature, and the aging step may more firmly form the formed network structure, and thus, may enhance the mechanical stability of the silica aerogel or silica aerogel blanket of the present invention.

The aging step of the present invention is performed by adding a solution in which a basic catalyst such as sodium hydroxide (NaOH), potassium hydroxide (KOH), ammonium hydroxide (NH₄OH), triethylamine, pyridine, and the like is diluted in an organic solvent at a concentration of 1-10%. Therefore, a Si-O-Si bonding in an aerogel is induced to the maximum to allow the network structure of a silica gel to be firmer, so that there is an effect of facilitating the maintenance of the pore structure in a quick drying process to be performed later. At this time, the organic solvent may be the alcohol (polar organic solvent) described above, and specifically, may include ethanol.

Also, the aging step should be performed in a suitable temperature range to enhance the optimal pore structure. The aging step of the present invention may be performed by leaving the wet gel blanket composite to stand for 1 hour to 10 hours at a temperature of 30 °C to 70 °C. If the aging temperature is below 30 °C, aging time becomes excessively long, which may cause the total process time to increase, so that there may be a problem in that productivity decreases, and if the aging temperature is above 70 °C, the temperature is out of the boiling point of ethanol, so that there may be a problem in that the loss of the solvent due to evaporation increases, which may cause the cost of raw materials to increase.

Meanwhile, the second aspect of the present invention does not include surface-modifying the wet gel blanket. If an aerogel blanket is prepared according to the prior art, a step of surface modification in which a hydroxy group on the surface of a wet gel blanket is substituted with a methyl group is typically performed, through which the surface of aerogel becomes hydrophobic, but there has been a problem in that the content of organic matters of the aerogel blanket increases during the process.

Therefore, in the second aspect of the present invention, surface modification is not performed to prevent the increase in the content of organic matters.

### Step 3)

Step 3) is a step of drying the wet gel blanket, and by removing the water and the solvent in the wet gel blanket, an aerogel blanket may be prepared.

Meanwhile, the preparation method according to an embodiment of the present invention may further perform a washing step before the drying. The washing is a step of removing impurities (sodium ions, unreacted substances, byproducts, and the like) generated during the reaction and residual ammonia, which may generate an ammonium carbonate salt by reacting with CO₂ during supercritical drying, and the like in order to obtain a hydrophobic silica aerogel with high purity, and may be performed by a dilution process or an exchange process using a non-polar organic solvent.

The drying step according to an embodiment of the present invention may be performed through a process of removing a solvent while maintaining the pore structure of an aged gel, and the drying step may be performed by a supercritical drying process or an atmospheric drying process.

The supercritical drying process may be performed using supercritical carbon dioxide. Carbon dioxide (CO₂) is in a gaseous state at room temperature and atmospheric pressure, but when a temperature and a pressure exceed a predetermined limit of a temperature and a pressure called a supercritical point, the evaporation process does not occur so that carbon dioxide becomes to be in a critical state in which a gas and a liquid cannot be distinguished, and carbon dioxide in the critical state is referred to as a supercritical carbon dioxide.

The supercritical carbon dioxide has a molecular density close to that of a liquid, but has a low viscosity, thereby having properties similar to those of a gas, and has a high diffusion rate and a high thermal conductivity, so that the drying efficiency is high, and drying processing time may be shortened.

Specifically, the supercritical drying process performs a solvent substitution process in which an aged wet gel blanket is placed into a supercritical drying reactor, and then CO₂ in a liquid state is filled therein, followed by substituting an alcohol solvent inside the wet gel with CO₂. Thereafter, the temperature is raised to 40 °C to 70°C at a predetermined temperature raising rate, specifically, 0.1 °C/min to 1 °C/min, and the pressure which is greater than or equal to a pressure at which carbon dioxide becomes to be a supercritical state, specifically, the pressure of 100 bar to 150 bar is maintained to allow the carbon dioxide to remain in the supercritical state for a predetermined amount of time, specifically for 20 minutes to 1 hour. In general, carbon dioxide becomes supercritical at a temperature of 31 °C, and a pressure of 73.8 bar. After carbon dioxide is maintained at a predetermined temperature and a predetermined pressure to remain in a supercritical state for 2 hours to 12 hours, more specifically, 2 hours to 6 hours, the pressure is gradually lowered to complete the supercritical drying process to prepare an aerogel blanket.

Also, the atmospheric drying process may be performed according to a typical method such as hot air drying at a temperature of 70 °C to 200 °C and an atmospheric pressure (1±0.3 atm), IR drying, or the like.

As a result of the above-described drying process, a blanket including porous aerogel having nano-sized pores may be prepared. Particularly, the silica aerogel according to an embodiment of the present invention has excellent physical properties, low tap density and high porosity in particular, together with a high degree of hydrophobicity, and a silica aerogel-containing blanket including the same has excellent mechanical flexibility together with low thermal conductivity.

In addition, before or after the drying process, a compression process to control the thickness and to make the internal structure and surface shape of a blanket uniform, a molding process to have a suitable shape or morphology according to use, or a lamination process for laminating a separate functional layer may be further performed.

### Examples

Hereinafter, the present invention will be described in more detail with reference to examples. However, the following examples are merely illustrative of the present invention and are not intended to limit the scope of the present invention.

### Example 1

Tetraethyl orthosilicate (TEOS) and water were mixed in a molar ratio of 1:4 and ethanol having a weight ratio of 1:1 with respect to the TEOS was added thereto to prepare a silica precursor solution. In order to promote hydrolysis of the silica precursor solution, an acid was added such that the pH of the silica precursor solution was to be 3 or less and then stirred for 2 hours or more to prepare a hydrated TEOS solution. Ethanol having a weight ratio of 1:4 with respect to the hydrated TEOS solution was added to prepare a silica sol. TiO2_{,} an opacifying agent having a weight ratio of 0.2 based on 100 parts by weight of the silica sol and Ultracarb (LKAB Co., Ltd), a flame retardant, were mixed and then stirred for 30 minutes. A base catalyst solution (5 wt% of NaOH aqueous solution) having a volume ratio of 99:1 with respect to the silica sol was added to prepare a catalyzed sol.

The catalyzed sol was impregnated into a fiber and gelled. The gelled wet gel blanket was recovered from a reaction vessel, aged in a 10 wt% TMES solution at 60 °C for 16 hours, and then surface-modified. The prepared wet gel blanket was placed in a supercritical extractor and then CO₂ was injected thereto, and thereafter, the temperature inside the extractor was raised to 60 °C over the course of 1 hour, and then supercritical drying was performed at 60 °C and 150 bar.

After the drying is completed, heat treatment was performed in an electric furnace at 650 °C for 10 minutes in a general air atmosphere to obtain an aerogel blanket.

### Examples 2 to 5

An aerogel blanket was prepared in the same manner as in Example 1, except that the temperature and time conditions of the heat treatment were changed as shown in Table 1 below.

### Example 6

Tetraethyl orthosilicate (TEOS) and water were mixed in a molar ratio of 1:4 and ethanol having a weight ratio of 1:1 with respect to the TEOS was added thereto to prepare a silica precursor solution. In order to promote hydrolysis of the silica precursor solution, an acid was added such that the pH of the silica precursor solution was to be 3 or less and then stirred for 2 hours or more to prepare a hydrated TEOS solution. Ethanol having a weight ratio of 1:4 with respect to the hydrated TEOS solution was added to prepare a silica sol. TiO2_{,} an opacifying agent having a weight ratio of 0.2 based on 100 parts by weight of the silica sol and Ultracarb (LKAB Co., Ltd), a flame retardant, were mixed and then stirred for 30 minutes. A base catalyst solution (5 wt% of NaOH aqueous solution) having a volume ratio of 99:1 with respect to the silica sol was added to prepare a catalyzed sol.

Meanwhile, a prepared fiber was heat-treated in an electric furnace at 450 °C for 1 hour in a general air atmosphere.

Thereafter, the catalyzed sol was impregnated into the heat-treated fiber and gelled. The gelled wet gel blanket was placed in a supercritical extractor without a separate surface modification step, and then CO₂ was injected thereto, and thereafter, the temperature in the extractor was raised to 60 °C over the course of 1 hour, and then supercritical drying was performed at 60 °C and 150 bar.

### Comparative Example 1

Tetraethyl orthosilicate (TEOS) and water were mixed in a molar ratio of 1:4 and ethanol having a weight ratio of 1:1 with respect to the TEOS was added thereto to prepare a silica precursor solution. In order to promote hydrolysis of the silica precursor solution, an acid was added such that the pH of the silica precursor solution was to be 3 or less and then stirred for 2 hours or more to prepare a hydrated TEOS solution. Ethanol having a weight ratio of 1:4 with respect to the hydrated TEOS solution was added to prepare a silica sol. TiO2_{,} an opacifying agent having a weight ratio of 0.2 based on 100 parts by weight of the silica sol and Ultracarb (LKAB Co., Ltd), a flame retardant, were mixed and then stirred for 30 minutes. A base catalyst solution (5 wt% of NaOH aqueous solution) having a volume ratio of 99:1 with respect to the silica sol was added to prepare a catalyzed sol.

The catalyzed sol was impregnated into a fiber and gelled. The gelled wet gel blanket was recovered from a reaction vessel, aged in a 10 wt% TMES solution at 60 °C for 16 hours, and then surface-modified. The prepared wet gel blanket was placed in a supercritical extractor and then CO₂ was injected thereto, and thereafter, the temperature inside the extractor was raised to 60 °C over the course of 1 hour, and then supercritical drying was performed at 60 °C and 150 bar.

### Comparative Examples 2 and 4

An aerogel blanket was prepared in the same manner as in Example 1, except that the temperature and time conditions of the heat treatment were changed as shown in Table 1 below.

### Comparative Example 3

Tetraethyl orthosilicate (TEOS) and water were mixed in a molar ratio of 1:4 and ethanol having a weight ratio of 1:1 with respect to the TEOS was added thereto to prepare a silica precursor solution. In order to promote hydrolysis of the silica precursor solution, an acid was added such that the pH of the silica precursor solution was to be 3 or less and then stirred for 2 hours or more to prepare a hydrated TEOS solution. Ethanol having a weight ratio of 1:4 with respect to the hydrated TEOS solution was added to prepare a silica sol. TiO2_{,} an opacifying agent having a weight ratio of 0.2 based on 100 parts by weight of the silica sol and Ultracarb (LKAB Co., Ltd), a flame retardant, were mixed and then stirred for 30 minutes. A base catalyst solution (5 wt% of NaOH aqueous solution) having a volume ratio of 99:1 with respect to the silica sol was added to prepare a catalyzed sol.

Meanwhile, a prepared fiber was heat-treated in an electric furnace at 450 °C for 1 hour in a general air atmosphere.

The catalyzed sol was impregnated into the heat-treated fiber and gelled. The gelled wet gel blanket was recovered from a reaction vessel, aged in a 10 wt% TMES solution at 60 °C for 16 hours, and then surface-modified. The prepared wet gel blanket was placed in a supercritical extractor and then CO₂ was injected thereto, and thereafter, the temperature inside the extractor was raised to 60 °C over the course of 1 hour, and then supercritical drying was performed at 60 °C and 150 bar.

**[Table 1]**

| | Blanket pre-treatment | Surface modification | Conditio ns of heat treatment |
|---|---|---|---|
| Example 1 | X | O | 650 °C, 10 minutes |
| Example 2 | X | O | 650 °C, 3 hours |
| Example 3 | X | O | 650 °C, 6 hours |
| Example 4 | X | O | 550 °C, 10 minutes |
| Example 5 | X | O | 450 °C, 3 hours |
| Example 6 | 450 °C, 1 hour | X | X |
| Comparative Example 1 | X | O | X |
| Comparative Example 2 | X | O | 450 °C, 10 minutes |
| Comparative Example 3 | 450 °C, 1 hour | O | X |
| Comparative Example 4 | X | O | 350 °C, 10 minutes |

### Experimental Example 1: Content of organic matters

The weight (Wa) of the aerogel blanket sample in a size of 10 cm x 10 cm was measured, and then, heat treatment was performed thereon at 600 °C for 12 hours or more in a general air atmosphere to remove all of organic matters, and then the weight (Wb) was measured. Finally, the content of the organic matters was calculated according to Equation 2 below. [Equation 2] $Content of organic matters \left(wt%\right) = \left[\left(Wa-Wb\right)/Wa\right] \times 100$

**[Table 2]**

| | Content of organic matters (wt%) |
|---|---|
| Example 1 | 0.90 |
| Example 2 | 0.05 |
| Example 3 | 0.01 |
| Example 4 | 1.0 |
| Example 5 | 0.1 |
| Example 6 | 1.2 |
| Comparative Example 1 | 8.5 |
| Comparative Example 2 | 2.7 |
| Comparative Example 3 | 5.3 |
| Comparative Example 4 | 4.8 |

As shown in Table 2 above, it has been confirmed that the aerogel blanket according to the present invention has an organic matter content of less than 2.0 wt%, which is low, and the aerogel blankets of Comparative Examples 1 to 4 have an organic matter content of greater than 2.0 wt%.

This is because when preparing the aerogel blanket in Examples 1 to 6, high-temperature heat treatment is performed, or a fiber is pre-treated and used, but surface modification is not performed, so that the content of residual organic matters in the aerogel blanket exhibits low.

### Experimental Example 2: Room-temperature thermal conductivity

Using a 30 cm x 30 cm sample of the silica aerogel blanket prepared in each of Examples and Comparative Examples, the thermal conductivity at room temperature (20±5 °C) was measured using HFM 436 equipment manufactured by NETZSCH Co.

**[Table 3]**

| | Room-temperature thermal conductivity (mW/mK) |
|---|---|
| Example 1 | 21.1 |
| Example 2 | 21.6 |
| Example 3 | 24.8 |
| Example 4 | 21.2 |
| Example 5 | 22.8 |
| Example 6 | 20.0 |
| Comparative Example 1 | 18.3 |
| Comparative Example 2 | 19.1 |
| Comparative Example 3 | 18.4 |
| Comparative Example 4 | 18.7 |

As shown in Table 3 above, although the aerogel blanket according to an embodiment of the present invention was prepared through a high-temperature heat treatment process, the aerogel blanket may maintain a typical level of thermal conductivity, and has higher thermal conductivity and more excellent high-temperature heat blocking performance than those of Comparative Examples.

### Experimental Example 3: High-temperature heat blocking performance

A 3 mm-thick sample of each of the silica aerogel blankets prepared in Examples and Comparative Examples was prepared in a size of 10 cm x 10 cm. The temperature of an upper heating plate was heated to 650 °C. The measurement sample was placed on a lower sample plate equipped with a thermocouple and the height was adjusted such that the heating plate came into contact with an upper portion of the sample. The temperature (back surface temperature) and time at a lower end of the sample were recorded immediately after the contact, and the time (sec) taken to reach 180 °C was measured.

**[Table 4]**

| | High-temperature heat blocking performance (sec) |
|---|---|
| Example 1 | 1245 |
| Example 2 | 1570 |
| Example 3 | 1845 |
| Example 4 | 990 |
| Example 5 | 1450 |
| Example 6 | 900 |
| Comparative Example 1 | 645 |
| Comparative Example 2 | 820 |
| Comparative Example 3 | 750 |
| Comparative Example 4 | 770 |

As shown in Table 4 above, it has been confirmed that the aerogel blankets according to Examples of the present invention have excellent heat blocking performance at high temperatures, and thus, it takes longer for the aerogel blankets to reach 180 °C than those of Comparative Examples.

### Experimental Example 4: Compression resistance

A sample of each of the silica aerogel blankets respectively prepared in Examples and Comparative Example above was prepared in a size of 10 cm X 10 cm to measure a thickness (Ta) thereof. Using UTM equipment, a pressure of 350 kPa was applied to the sample, and a thickness (Tb) of the sample at the time of compression was measured. The difference between the initial thickness and the thickness at the time of compression was divided by the initial thickness to calculate a compression rate (%) according to Equation 1 below. [Equation 1] $Compression rate \left(%\right) = \left[\left(Ta-Tb\right)/Ta\right] \times 100$

**[Table 5]**

| | Compression rate(%) under pressure of 350 kPa |
|---|---|
| Example 1 | 25 |
| Example 2 | 20 |
| Example 3 | 16 |
| Example 4 | 27 |
| Example 5 | 22 |
| Example 6 | 28 |
| Comparative Example 1 | 40 |
| Comparative Example 2 | 33 |
| Comparative Example 3 | 35 |
| Comparative Example 4 | 38 |

As shown in Table 5 above, it has been confirmed that after the heat treatment, the aerogel blanket according to the embodiment of the present invention has improved strength and improved thickness reduction rate (compression ratio) at the time of compression, and thus, has improved compression resistance.

### Experimental Example 5: Moisture impregnation rate

According to ASTM C1511, a specimen having a size of 25.4 cm x 25.4 cm was floated on distilled water of 21±2 °C and a 6.4 mm mesh screen was placed on the specimen to sink the specimen to 127 mm below the surface of the water. 15 minutes later, the screen was removed, and when the specimen rose to the surface, the specimen was picked up with a clamp and was hung vertically for 60±5 seconds, and then the weight of the specimen before and after the impregnation were each measured to confirm a weight increase rate, and the weight increase rate was represented as a moisture impregnation rate.

**[Table 6]**

| | Moisture impregnation rate (wt%) |
|---|---|
| Example 1 | 180 |
| Example 2 | 390 |
| Example 3 | 410 |
| Example 4 | 155 |
| Example 5 | 375 |
| Example 6 | 120 |
| Comparative Example 1 | 3 |
| Comparative Example 2 | 45 |
| Comparative Example 3 | 8 |
| Comparative Example 4 | 11 |

As shown in Table 6 above, it has been confirmed that the aerogel blanket of the present invention has a low content of organic matters, and thus, has a low degree of hydrophobicity and a high moisture impregnation rate.

### Experimental Example 6: Pore distribution

0.1 g of an aerogel blanket sample was placed in a glass dedicated to BET, connected to pre-treatment equipment, and then pre-treated at 150 °C for 12 hours while reducing the pressure to a pressure of 1 Torr to 760 Torr to remove impurities including moisture in the sample. The pore distribution of the pre-treated sample was analyzed by the absorption/desorption amount of nitrogen according to partial pressure (0.11<p/p0<1) using a 3 FLEX device of Micrometrics Co., and is shown in FIG. 1.

As shown in FIG. 1, it has been confirmed that the aerogel of Comparative Example 1 has a small pore diameter of less than 10 nm, whereas the aerogel of Example 1 has a large pore size overall and a wide distribution since the aerogel was sintered.

### Experimental Example 7: Heat of combustion measurement

The heat of combustion was measured according to the ISO 1716 measurement standards.

**[Table 7]**

| | Heat of combustion (cal/g) |
|---|---|
| Example 1 | 1 or less |
| Example 2 | 1 or less |
| Example 3 | 1 or less |
| Example 4 | 56 |
| Example 5 | 57 |
| Example 6 | 1 or less |
| Comparative Example 1 | 1120 |
| Comparative Example 2 | 240 |
| Comparative | 630 |
| Example 3 | |

As shown in Table 7 above, Examples showed a very low level of heat of combustion compared to that of Comparative Examples. This indicates that when the aerogel blanket of the present invention is exposed high temperatures, heat generation is reduced and high-temperature heat blocking performance is excellent.

In view of the foregoing disclosure, the present invention may be implemented in accordance with the following itemized embodiment examples.
(1) An aerogel blanket comprising: aerogel; and a substrate for a blanket, wherein a content of an organic matter according to Equation 1 below is 1.2 wt% or less:
   [Equation 1] $the content of the organic matter \left(wt%\right) = \left[\left(Wa-Wb\right)/Wa\right] \times 100$ wherein in Equation 1 above,
   Wa is a weight(g) of the aerogel blanket before being heat-treated, and
   Wb is a weight(g) of the aerogel blanket after being heat-treated at 600 °C for 12 hours.
(2) The aerogel blanket of (1), wherein
   the organic matter is one or more selected from the group consisting of a hydrophobic group bonded to the aerogel, a binder, and a sizing agent.
(3) The aerogel blanket of (1), wherein the aerogel blanket has a room-temperature thermal conductivity of 15 mW/mK to 35 mW/mK.
(4) The aerogel blanket of (1), wherein the aerogel comprises pores having a pore diameter of 10 nm to 50 nm.
(5) The aerogel blanket of (1), wherein the substrate for a blanket is one or more selected from the group consisting of a film, a sheet, a net, a fiber, a porous body, a foam body, and a non-woven fabric body.
(6) The aerogel blanket of (5), wherein the substrate for a blanket is one or more selected from the group consisting of glass fiber, ceramic wool, basalt fiber, and ceramic paper.
(7) The aerogel blanket of (1), wherein the aerogel blanket has a moisture impregnation rate of 100 wt% or greater according to Equation 2 below: [Equation 2] $The moisture impregnation rate \left(wt%\right) = \left[\left(Wc-Wd\right)/Wd\right] \times 100$
   wherein in Equation 2 above,
   Wc is a weight(g) of the aerogel blanket after being immersed in distilled water at 21±2 °C for 15 minutes, and
   Wd is a weight(g) of the aerogel blanket before being immersed.
(8) The aerogel blanket of (1), wherein the aerogel blanket has heat of combustion of 200 cal/g or less according to an ISO 1716 measurement method.
(9) The aerogel blanket (1), wherein the aerogel blanket is prepared by a preparation method including:
   1) preparing a sol, which includes a precursor material and a catalyst composition;
   2) impregnating the substrate for a blanket with the sol, and gelling the sol to prepare a wet gel blanket;
   3) surface-modifying the wet gel blanket;
   4) drying the surface-modified wet gel blanket; and
   5) heat-treating the dried wet gel blanket at a temperature of 450 °C to 650 °C for 10 minutes to 6 hours.
(10) The aerogel blanket of (1), wherein the aerogel blanket is prepared by a preparation method including:
   1) preparing a sol, which includes a precursor material and a catalyst composition;
   2) impregnating the substrate for a blanket with the sol, and gelling the sol to prepare a wet gel blanket; and
   3) drying the wet gel blanket,
   wherein the substrate for a blanket is pre-treated at a temperature of 400 °C to 500 °C for 30 minutes to 2 hours, and surface-treating the wet gel blanket is not included.
(11) An insulation member comprising the aerogel blanket of any one of (1) to (10).
(12) A battery comprising the insulation member of (11).
(13) An aerogel blanket comprising:
   aerogel; and
   a substrate for a blanket,
   wherein the aerogel blanket has a compression rate of 15% to 30% according to Equation 3 below: [Equation 3] $The compression rate \left(%\right) = \left[\left(Ta-Tb\right)/Ta\right] \times 100$
   wherein in Equation 3 above,
   Ta is a thickness(mm) of the aerogel blanket before being compressed; and
   Tb is a thickness(mm) of the aerogel blanket after being compressed under 350 kPa.

## Claims

1. An aerogel blanket comprising:
aerogel; and
a substrate for a blanket,
wherein the aerogel blanket has a compression rate of 15% to 30% according to Equation 1 below: [Equation 1] $The compression rate \left(%\right) = \left[\left(Ta-Tb\right)/Ta\right] \times 100$
wherein in Equation 1 above,
Ta is a thickness(mm) of the aerogel blanket before being compressed; and
Tb is a thickness(mm) of the aerogel blanket after being compressed under 350 kPa.

2. The aerogel blanket of claim 1, wherein a content of an organic matter according to Equation 2 below is 1.2 wt% or less: [Equation 2] 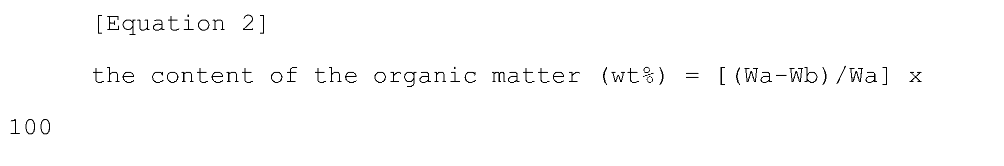 the content of the organic matter (wt%) = [(Wa-Wb)/Wa] x 100 wherein in Equation 2 above,
Wa is a weight(g) of the aerogel blanket before being heat-treated, and
Wb is a weight(g) of the aerogel blanket after being heat-treated at 600 °C for 12 hours.

3. The aerogel blanket of claim 2, wherein
the organic matter is one or more selected from the group consisting of a hydrophobic group bonded to the aerogel, a binder, and a sizing agent.

4. The aerogel blanket of claim 1, wherein the aerogel blanket has a room-temperature thermal conductivity of 15 mW/mK to 35 mW/mK.

5. The aerogel blanket of claim 1, wherein the aerogel comprises pores having a pore diameter of 10 nm to 50 nm.

6. The aerogel blanket of claim 1, wherein the substrate for a blanket is one or more selected from the group consisting of a film, a sheet, a net, a fiber, a porous body, a foam body, and a non-woven fabric body.

7. The aerogel blanket of claim 6, wherein the substrate for a blanket is one or more selected from the group consisting of glass fiber, ceramic wool, basalt fiber, and ceramic paper.

8. The aerogel blanket of claim 1, wherein the aerogel blanket has a moisture impregnation rate of 100 wt% or greater according to Equation 3 below: [Equation 3] 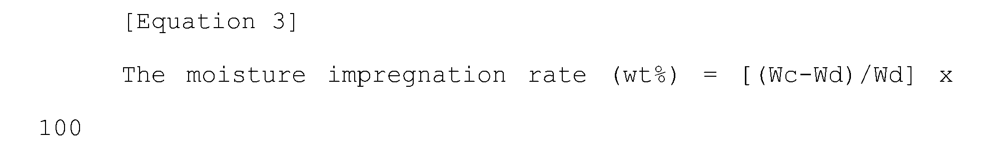 The moisture impregnation rate (wt%) = [(Wc-Wd)/Wd] x 100 wherein in Equation 3 above,
Wc is a weight(g) of the aerogel blanket after being immersed in distilled water at 21±2 °C for 15 minutes, and
Wd is a weight(g) of the aerogel blanket before being immersed.

9. The aerogel blanket of claim 1, wherein the aerogel blanket has heat of combustion of 200 cal/g or less according to an ISO 1716 measurement method.

10. The aerogel blanket of claim 1, wherein the aerogel blanket is prepared by a preparation method including:
1) preparing a sol, which includes a precursor material and a catalyst composition;
2) impregnating the substrate for a blanket with the sol, and gelling the sol to prepare a wet gel blanket;
3) surface-modifying the wet gel blanket;
4) drying the surface-modified wet gel blanket; and
5) heat-treating the dried wet gel blanket at a temperature of 450 °C to 650 °C for 10 minutes to 6 hours.

11. The aerogel blanket of claim 1, wherein the aerogel blanket is prepared by a preparation method including:
1) preparing a sol, which includes a precursor material and a catalyst composition;
2) impregnating the substrate for a blanket with the sol, and gelling the sol to prepare a wet gel blanket; and
3) drying the wet gel blanket,
wherein the substrate for a blanket is pre-treated at a temperature of 400 °C to 500 °C for 30 minutes to 2 hours, and surface-treating the wet gel blanket is not included.

12. An insulation member comprising the aerogel blanket of any one of claims 1 to 11.

13. A battery comprising the insulation member of claim 12.
